(19) Europäisches Patentamt
European Patent Office
Office européen des brevets

(11) **EP 3 869 151 B1**

(12) **EUROPÄISCHE PATENTSCHRIFT**

(45) Veröffentlichungstag und Bekanntmachung des Hinweises auf die Patenterteilung:
**19.04.2023  Patentblatt 2023/16**

(21) Anmeldenummer: **20158926.4**

(22) Anmeldetag: **24.02.2020**

(51) Internationale Patentklassifikation (IPC):
**G01C 7/04** (2006.01)     **G01S 7/497** (2006.01)
**G01S 17/894** (2020.01)     **G01S 7/51** (2006.01)
**G01S 17/14** (2020.01)     **G01S 17/42** (2006.01)
**G01S 17/86** (2020.01)     **G01S 17/89** (2020.01)

(52) Gemeinsame Patentklassifikation (CPC):
**G01C 7/04; G01S 7/497; G01S 7/51; G01S 17/14; G01S 17/42; G01S 17/86; G01S 17/89**

(54) **VORRICHTUNG ZUM VERMESSEN EINER UMGEBUNG**

DEVICE FOR MEASURING AN ENVIRONMENT

DISPOSITIF DE MESURE D'UN ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.08.2021  Patentblatt 2021/34**

(73) Patentinhaber: **RIEGL Laser Measurement Systems GmbH**
**3580 Horn (AT)**

(72) Erfinder:
• **RIEGER, Peter**
  **3824 Grossau (AT)**
• **PFENNIGBAUER, Martin**
  **3430 Tulln (AT)**

(74) Vertreter: **Weiser & Voith**
**Patentanwälte Partnerschaft**
**Kopfgasse 7**
**1130 Wien (AT)**

(56) Entgegenhaltungen:
**JP-A- 2012 230 594**

• **Simon Griffioen: "A Voxel-based Methodology To Detect (Clustered) Outliers in Aerial LIDAR Point Clouds", , 1. November 2018 (2018-11-01), XP055738426, Gefunden im Internet: URL:http://resolver.tudelft.nl/uuid:2ffa73 f4-34cc-4ea0-82df-11e61cb47bea [gefunden am 2020-10-09]**

EP 3 869 151 B1

**Beschreibung**

Die vorliegende Erfindung betrifft eine Vorrichtung zum Vermessen einer Umgebung von einem Fahrzeug aus, insbesondere Luftfahrzeug, mit einem fahrzeugmontierbaren Laserscanner, der dafür ausgebildet ist, mittels im wesentlichen periodisch ausgesandter Laserimpulse die Umgebung abzutasten und aus den umgebungsreflektierten Laserimpulsen eine Folge von Entfernungsmesswerten und ausgehend von dieser eine Folge von Abtastpunkten zu erstellen, welche eine Abtastpunktwolke der Umgebung bilden, und einer Anzeigeeinrichtung, die dafür ausgebildet ist, die Abtastpunktwolke in einer Ansichtsrichtung projiziert auf einem Bildschirm darzustellen.

Beim mobilen Laserscannen dient die Anzeigeeinrichtung dazu, schon während des Scannens eine Echtzeit-Vorschau der Abtastpunktwolke zu haben, um die Durchführung der Vermessungsaufgabe zu kontrollieren und erforderlichenfalls korrigierend einzugreifen. Beispielsweise wird beim Überfliegen einer zu vermessenden Landschaft diese streifenweise abgeflogen und gescannt, und in der Vorschau kann die ordnungsgemäße Lage und Überdeckung der Scanstreifen überprüft werden, um eine vollständige Abdeckung der Landschaft zu gewährleisten. Scanfehler, wie beispielsweise fehlende Messpunkte aufgrund zu geringer Laserleistung oder zu großer Flughöhe während des Flugs, die erst nach dem Flug in der Offline-Auswertung der Scandaten erkannt werden, erfordern kostspielige Ergänzungsflüge und sind unbedingt zu vermeiden. Denn jegliche Scanfehler, die schon während des Scannens "in Echtzeit" erkannt werden, können wesentlich kostengünstiger sofort bereinigt werden, beispielsweise durch Anpassung der Scanparameter wie Laserleistung, Ablenkgeschwindigkeiten des Lasermessstrahls oder Variation der Laserimpulsrate, oder durch Adaptierung der Flugbahn, -lage und -richtung, usw.

Einer möglichst genauen und aktuellen, d.h. latenzarmen Erstellung der Vorschau der Abtastpunktwolke kommt daher große Bedeutung zu. Die Auflösung der Vorschau auf dem Bildschirm und ihre Aktualität sind jedoch begrenzt, und zwar aus mehreren Gründen. Erstens benötigt die Umrechung der Entfernungsmesswerte des Laserscanners in georeferenzierte Abtastpunkte der Abtastpunktwolke einiges an Rechenleistung, da für jeden Entfernungsmesswert die aktuelle Aussendeposition und -richtung des zugrundeliegenden Laserimpulses mitberücksichtigt werden müssen. Die Rechenleistung mobiler Systeme, insbesondere an Bord eines Luftfahrzeugs, ist jedoch begrenzt, sodass die Vorschau in der Regel in einer stark reduzierten Auflösung erzeugt wird, nicht zuletzt auch zur Minimierung der rechenzeitbedingten Latenz. Zweitens ist die Pixelauflösung des Bildschirms - im Vergleich zu der Menge an Abtastpunkten, die für eine größere Landschaft anfallen - meist viel zu gering. Nicht zuletzt setzt auch die Auflösung des menschlichen Auges und Aufmerksamkeit des Messtechnikers am Bildschirm Grenzen. Kleinräumige Scanfehler, wie sie beispielsweise durch fehlende Messwerte von schwach reflektierenden Objekten wie Verglasungen, Schieferdächern od.dgl. verursacht werden, bleiben daher oft unbemerkt. Sie fallen durch den Raster einer speziell für Vorschauzwecke auflösungsreduzierten Abtastpunktwolke, der stets begrenzten Bildschirmauflösung und/oder der begrenzten Auflösung des menschlichen Auges und Aufmerksamkeit. Eine übermäßige Anhäufung unentdeckter lokaler Scanfehler kann jedoch die gesamte Vermessung unbrauchbar machen und ihre Neudurchführung erfordern.

Simon Griffioen: "A Voxel-based Methodology to Detect (Clustered) Outliers in Aerial LIDAR Point Clouds", 1. November 2018 (2018-11-01), URL: http://resolver.tudelft.nl/uuid:2ffa73f 4-34cc-4ea0-82df-11e61cb47bea beschreibt eine raumabstandsbasierte Outlier-Detektion in einer Laserscanner-Punktwolke.

Die Erfindung setzt sich zum Ziel, die Nachteile des genannten Standes der Technik zu überwinden und eine Vorrichtung zu schaffen, welche eine bessere und sicherere Vermessung einer Umgebung von einem Fahrzeug aus ermöglicht.

Dieses Ziel wird mit einer Vorrichtung der einleitend genannten Art erreicht, die sich gemäß der Erfindung dadurch auszeichnet,

dass die Vorrichtung eine Anzeigeeinrichtung, die dafür ausgebildet ist, die Abtastpunktwolke in einer Ansichtsrichtung projiziert auf einem Bildschirm darzustellen, enthält, und
dass der Laserscanner dafür ausgebildet ist, für zwei in der Entfernungsmesswertfolge aufeinanderfolgende Entfernungsmesswerte, deren zeitlicher Abstand einen Schwellwert überschreitet, oder für zwei in der Abtastpunktefolge aufeinanderfolgende Abtastpunkte, deren zeitlicher oder in Ansichtsrichtung projizierter örtlicher Abstand einen Schwellwert überschreitet, eine Datenmarkierung zu erstellen,
wobei die Anzeigeeinrichtung dafür ausgebildet ist, die Datenmarkierung auf dem Bildschirm den genannten zwei Entfernungsmesswerten bzw. Abtastpunkten örtlich benachbart darzustellen.

Die Vorrichtung der Erfindung detektiert automatisch Lücken in den Scandaten, die auf das Ausbleiben von Umgebungsreflexionen der ausgesandten Laserimpulse zurückzuführen sind, und zeigt diese unabhängig von jedweder Unterabtastung oder Auflösungsreduzierung stets deutlich markiert und ortsrichtig auf dem Bildschirm an. Der Vermessungstechniker im Feld oder Operator kann damit bei Auftreten einer Scanlücke umgehend Korrekturmaßnahmen einleiten, z.B. die Scanparameter des Laserscanners anpassen, die Lage und Bewegungsbahn des Fahrzeugs abändern, Scanstreifen neuausrichten oder besser überlappen lassen usw. Fehlerhafte Messdaten mit Scanlücken, die erst in einer Offline-Auswertung bemerkt werden und eine Neudurchführung der Vermessung erfordern, können dadurch verhindert werden. Im Ergebnis erlaubt die erfindungsgemäße Vorrichtung eine zuverlässige, schnelle und damit auch besonders kostengünstige Vermessung einer Umgebung.

Wenn entsprechende Rechenleistung verfügbar ist, kann eine Abtastpunktwolke in voller Auflösung für die Erstellung der Vorschau berechnet werden; die erfindungsgemäße Vorrichtung überwindet dann die Auflösungsgrenzen des zur Vorschau verwendeten Bildschirms sowie jene des menschlichen Auges. Besonders vorteilhaft ist die Erfindung jedoch, wenn nur begrenzte Rechenleistung für die Berechnung der Abtastpunktwolke zur Verfügung steht, d.h. für die Vorschau eine spezielle auflösungsreduzierte Abtastpunktwolke auf Basis einer unterabgetasteten Entfernungsmesswert- oder Abtastpunktefolge verwendet wird, um Rechenaufwand zu sparen.

In einer bevorzugten Ausführungsform der Erfindung für diesen Einsatz, wenn also die Entfernungsmesswertfolge unterabgetastet und aus der unterabgetasteten Entfernungsmesswertfolge eine datenreduzierte Abtastpunktefolge und daraus eine auflösungsreduzierte Abtastpunktwolke erstellt wird, ist der Laserscanner dafür ausgebildet, die Datenmarkierung mit einem den genannten zwei aufeinanderfolgenden Entfernungsmesswerten zeitlich naheliegenden Entfernungsmesswert in die unterabgetastete Entfernungsmesswertfolge einzuspeisen. Die Detektion von Scanlücken erfolgt in dieser Ausführungsform somit direkt in der Entfernungsmesswertfolge, wenn über mehrere ausgesandte Laserimpulse hinweg keine umgebungsreflektierten Laserimpulse zurückempfangen werden. Das Ausbleiben von Reflexionen kann z.B. mit einem einfachen Zeitglied (Monoflop) detektiert werden, das mit jedem einlangenden Empfangsimpuls bzw. Entfernungsmesswert getriggert wird und bei Ausbleiben eines rechtzeitigen Triggersignales die Datenmarkierung erstellt.

Wenn hingegen erst die Abtastpunktefolge unterabgetastet und daraus die auflösungsreduzierte Abtastpunktwolke erstellt wird, ist der Laserscanner bevorzugt dafür ausgebildet, die Datenmarkierung mit einem den genannten zwei Abtastpunkten zeitlich oder in Ansichtsrichtung projiziert örtlich naheliegenden Abtastpunkt in die unterabgetastete Abtastpunktefolge einzuspeisen. Die Lückendetektion kann prinzipiell also auch erst nach Erstellung der Abtastpunktefolge erfolgen, wobei dann sowohl zeitliche als auch örtliche Lücken als Kriterium für die Erstellung der Datenmarkierung herangezogen werden können.

Die Erfindung wird nachstehend anhand von in den beigeschlossenen Zeichnungen dargestellten Ausführungsbeispielen näher erläutert. In den Zeichnungen zeigt:

Fig. 1 die Vorrichtung der Erfindung montiert auf einem Luftfahrzeug zum Vermessen einer Landschaft;
Fig. 2 den Scanteil des Laserscanners der Vorrichtung von Fig. 1 in einem schematischen Blockschaltbild;
Fig. 3 ein Beispiel einer Entfernungsmesswertfolge am Ausgang des Scanteils von Fig. 2 in einem Zeitdiagramm;
Fig. 4 ein Vorschaubild einer Abtastpunktwolke noch ohne Scanlückenmarkierung, erstellt mit der Vorrichtung von Fig. 1;
Fig. 5 eine erste Ausführungsform der Vorrichtung von Fig. 1 in einem Blockschaltbild;
Fig. 6 ein Vorschaubild einer Abtastpunktwolke mit Scanlückenmarkierung, erstellt mit der Vorrichtung von Fig. 1; und
Fig. 7 weitere Ausführungsformen der Vorrichtung von Fig. 1 in einem Blockschaltbild.

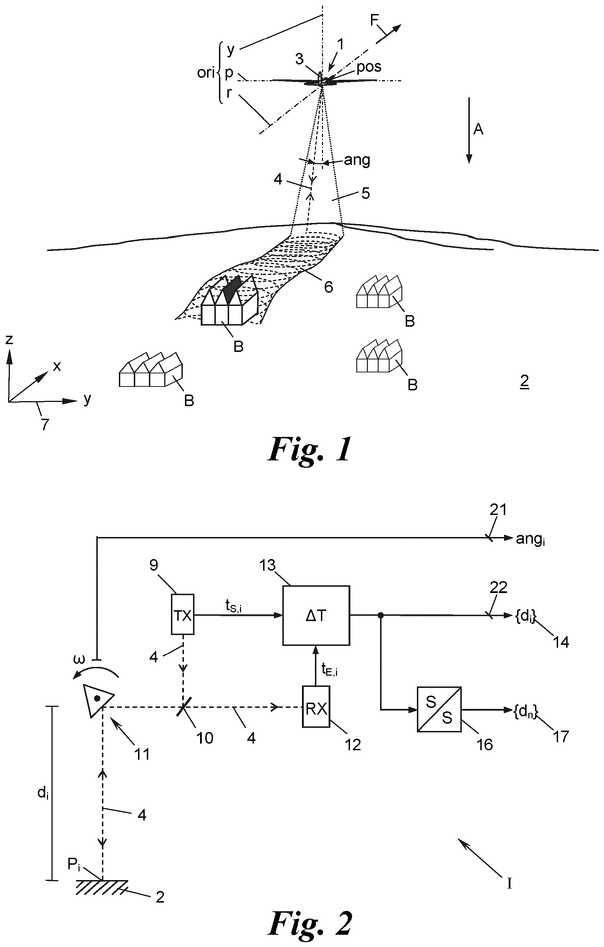

In Fig. 1 ist eine Vorrichtung 1 zum Vermessen einer Umgebung 2 von einem Fahrzeug 3 aus gezeigt. Die zu vermessende Umgebung 2 kann beispielsweise eine Landschaft (Terrain) mit Bauwerken B sein, aber auch der Straßenboden und die Fassaden entlang eines Straßenzugs, die Innenoberfläche einer Halle, eines Tunnels oder Bergwerks, oder die Meeresoberfläche oder der Meeresboden, usw. Bei dem Fahrzeug 3 kann es sich um ein Land-, Luft- oder Wasserfahrzeug handeln, bemannt oder unbemannt.

Die Vorrichtung 1 tastet mittels eines gepulsten Lasermessstrahls 4 die Umgebung 2 zu deren Vermessung ab. Der Lasermessstrahl 4 wird dazu beispielsweise zur Bildung eines Messfächers 5 hin und her geschwenkt und in Fortbewegungsrichtung F des Fahrzeugs 3 vorwärtsbewegt, um die Umgebung 2 in nebeneinanderliegenden Scanstreifen 6 (nur einer gezeigt) abzutasten.

Aus Laufzeitmessungen an Laserimpulsen $S_i$ (i = 1, 2, ...), die von der Vorrichtung 1 in Form des Lasermessstrahls 4 ausgesandt, jeweils an einem Punkt $P_i$ der Umgebung 2 reflektiert und als umgebungsreflektierte Laserimpulse $E_i$ in der Vorrichtung 1 zurückerhalten werden, können Entfernungsmesswerte $d_i$ von der jeweils aktuellen Position $pos_i$ der Vorrichtung 1 zum jeweiligen Abtastpunkt $P_i$ der Umgebung 2 berechnet werden anhand der bekannten Beziehung

$$d_i = c \cdot \Delta TP_i/2 = c \cdot (t_{E,i} - t_{s,i})/2 \qquad\qquad (1)$$

mit

$t_{s,i}$ ... Sendezeitpunkt des Sende-Laserimpulses $S_i$,
$t_{E,i}$ ... Empfangszeitpunkt des Empfangs-Laserimpulses $E_i$, und

c ......... Lichtgeschwindigkeit.

In Kenntnis der jeweiligen Position $pos_i$ der Vorrichtung 1 bei Aussendung des Laserimpulses $S_i$ in einem lokalen oder globalen Koordinatensystem 7 der Umgebung 2, der jeweiligen Orientierung $ori_i$ der Vorrichtung 1 im Koordinatensystem 7, angegeben z.B. durch die Kipp-, Roll- und Gierwinkel des Fahrzeugs 3 um seine Quer-, Längs- und Hochachsen p, r, y, und der jeweiligen Winkellage $ang_i$ des Lasermessstrahls 4 bezüglich des Fahrzeugs 3 kann dann aus dem jeweiligen Entfernungsmesswert $d_i$ die Position des Abtastpunkts $P_i$ im Koordinatensystem 7 berechnet werden.

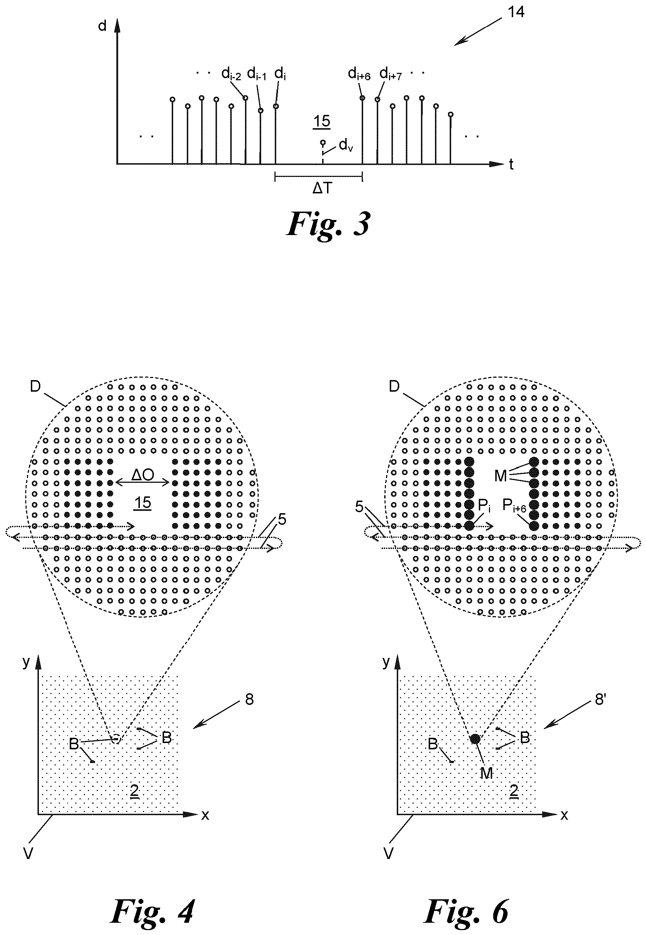

Eine Vielzahl solcherart vermessener und berechneter Abtastpunkte $P_i$ bildet die Umgebung 2 in Form einer "Abtastpunktwolke" 8 im Koordinatensystem 7 ab. Ein Beispiel einer solchen Abtastpunktwolke 8 ist in den Fig. 4 und 6 in einer vertikalen Ansichtsrichtung A projiziert, d.h. auf eine zur Ansichtsrichtung A normale Bildebene (hier: die Zeichnungsebene) projiziert, gezeigt, wobei der Schwärzungsgrad der dargestellten Punkte deren Höhenlage in z-Richtung des Koordinatensystem 7 versinnbildlicht.

Fig. 2 zeigt einen Scanteil I der Vorrichtung 1 zum Erzeugen der Entfernungsmesswerte $d_i$. Die Sende-Laserimpulse $S_i$ werden von einem Lasersender 9 über einen halbdurchlässigen Spiegel 10 und eine Ablenkeinrichtung 11, z.B. einen schwingenden Spiegel oder ein rotierendes Polygonspiegelrad oder eine rotierende Spiegelpyramide, ausgesandt, nach Reflektion am jeweiligen Umgebungspunkt $P_i$ auf demselben Weg über die Ablenkeinrichtung 11 als umgebungsreflektierte bzw. Empfangs-Laserimpulse $E_i$ zurückerhalten, durchsetzen den halbdurchlässigen Spiegel 10 und treffen auf einem Laserempfänger 12 auf. Die Sendezeitpunkte $t_{S,i}$ der Laserimpulse $S_i$ und die Empfangszeitpunkte $t_{E,i}$ der umgebungsreflektierten Laserimpulse $E_i$ werden einer Messeinrichtung 13 zugeführt, welche daraus anhand der Gleichung (1) die jeweilige Entfernung $d_i$ berechnet.

Wie aus Gleichung (1) ersichtlich, sind die Impulslaufzeiten $\Delta TP_i = (t_{E,i} - t_{S,i})$ und die Entfernungen $d_i$ einander direkt proportional, sodass in der vorliegende Beschreibung unter dem Begriff "Entfernungsmesswert" $d_i$ synonym sowohl die jeweilige Entfernung als auch jeweilige Impulslaufzeit verstanden werden; denn auch letztere stellt einen Messwert der jeweiligen Entfernung dar.

Die Sendeimpulsrate (pulse repetition rate, PRR) der Aussendung der Laserimpulse $S_i$ ist "im Wesentlichen" konstant, was auch Fälle inkludiert, in denen sie zur Auflösung von MTA-(multiple time around) -Mehrdeutigkeiten moduliert wird, um die Zuordnung von Empfangsimpulsen $E_i$ und Sendeimpulsen $S_i$ zueinander zu erleichtern, wie in der Technik bekannt.

Fig. 3 zeigt ein Beispiel einer Folge 14 von Entfernungsmesswerten $d_i$ aufgetragen über der Zeit t. Fig. 4 zeigt eine im Ansichtsrichtung A projizierte Vorschau V der auf Basis der Entfernungsmesswertfolge $\{d_i\}$ 14 erstellten Abtastpunktwolke 8 mit Detailvergrößerung D.

Wenn der Lasermessstrahl 4 in einem Scanfächer 5 das in Fig. 1 als Beispiel dargestellte mittlere Schieferdach geringer Reflektivität des Bauwerks B trifft, werden keine umgebungsreflektierten Laserimpulse $E_i$ zurückerhalten und es entsteht eine Lücke 15, und zwar zeitlich in der Entfernungsmesswertfolge 14 und örtlich in der Abtastpunktwolke 8. Kleine Lücken 15, d.h. wenn nur einige wenige Entfernungsmesswerte $d_i$ ausfallen, sind in der Vorschau V nicht (mehr) erkennbar. Beispielsweise liegt eine übliche Scanauflösung beim luftgestützten Laserscannen einer Landschaft im Bereich von ca. zehn Abtastpunkten $P_i$ pro Quadratmeter bzw. ca. drei Abtastpunkten $P_i$ pro Laufmeter, und ein Schieferdach mit einer Länge von zehn Metern führt zu einer Lücke 15 von ca. 30 Entfernungsmesswerten $d_i$ in einem Scanfächer 5. Zehn Quadratkilometer der Landschaft liefern ca. 100 Millionen Abtastpunkte $P_i$, welche auf einem Vorschaubildschirm mit einer HD-Auflösung von ca. 2 Millionen Pixeln nicht vollständig darstellbar sind, sodass kleine Scanlücken 15 in der Vorschau V in der Regel nicht erkennbar sind.

Erschwert wird die Detektion einer Scanlücke 15 in der Vorschau V in jenen Fällen, in welchen die Entfernungsmesswertfolge 14 zwecks Datenreduktion mittels eines Unterabtastgliedes 16 unterabgetastet wird, um eine unterabgetastet Folge 17 von Entfernungsmesswerten $d_n$ (n = 1, 2, ...) zu erzeugen, aus der eine unterabgetastete Abtastpunktwolke 8 erstellt wird. Bei einer Unterabtastrate von z.B. 1:100, wenn also nur jeder hundertste Entfernungsmesswert $d_i$ aus der Entfernungsmesswertfolge 14 herausgegriffen und für die Erstellung der unterabgetasteten Abtastpunktwolke 8 herangezogen wird, kann es passieren, dass kleine Scanlücken 15 unentdeckt bleiben, weil sie zwischen zwei aus der Folge 14 herausgegriffenen Entfernungsmesswerten $d_{i+1}$ und $d_{i+100}$ nicht mehr aufscheinen.

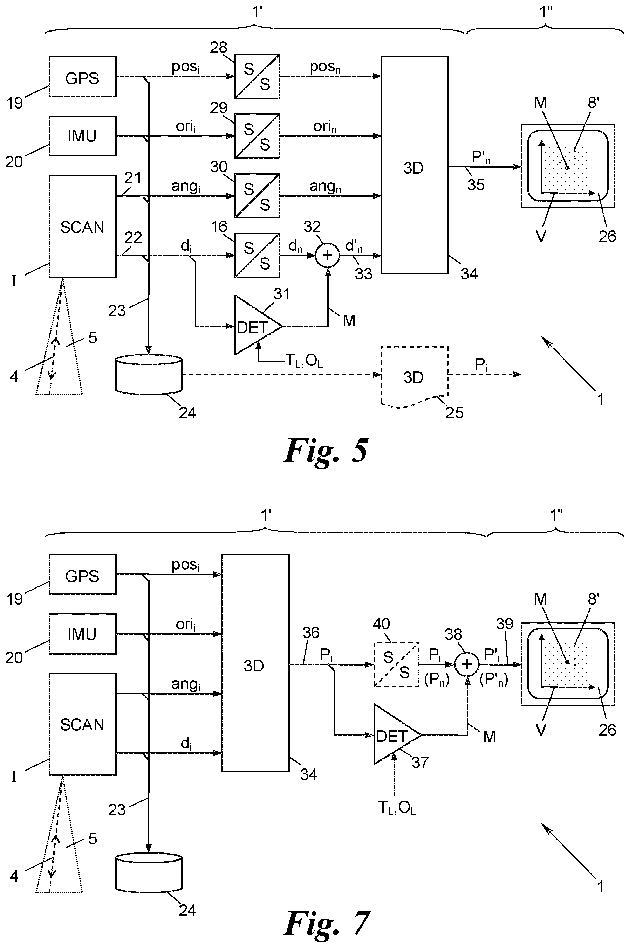

Fig. 5 zeigt eine erste Ausführungsform der Vermessungsvorrichtung 1 mit Maßnahmen zur Überwindung dieser Probleme. Die Vorrichtung 1 ist in einen Laserscanner 1' und eine Anzeigeeinrichtung 1" unterteilt. Die jeweils aktuelle Position $pos_i$ der Vorrichtung 1 im Koordinatensystem 7 wird mithilfe eines Satellitennavigationsempfängers 19, z.B. GPS-Empfängers, gemessen, und die jeweils aktuelle Orientierung $ori_i$ der Vorrichtung 1 mithilfe einer Trägheitsmesseinrichtung (inertial measurement unit, IMU) 20. An einem Ausgang 21 des Scanteils I steht der jeweils aktuelle Aussendewinkel $ang_i$ des Lasermessstrahls 4 bezüglich der Vorrichtung 1 zur Verfügung, und an einem Ausgang 22 des Scanteils I die Folge 14 von Entfernungsmesswerten $d_i$.

Die Daten $pos_i$, $ori_i$, $ang_i$ und $d_i$ stellen die "vollen" Rohdaten 23 der Vorrichtung 1 dar. Die Rohdaten 23 können beispielsweise in einem Datenrekorder 24 für eine spätere Offline-Auswertung 25 zur Erzeugung einer "vollen", d.h.

nichtauflösungsreduzierten Abtastpunktwolke 8 verwendet werden.

Zur Erzeugung einer auflösungsreduzierten Abtastpunktwolke 8 für die Echtzeit-Vorschau V auf einem Bildschirm 26 der Anzeigeeinrichtung 1" der Vorrichtung 1 werden die Rohdaten 23 unterabgetastet. Dazu wird für jede der Folgen von Entfernungsmesswerten $d_i$ sowie Positions-, Orientierungs- und Winkelwerten $pos_i$, $ori_i$ und $ang_i$ jeweils ein Unterabtastglied 16, 28 - 30 verwendet. Aufeinanderfolgende Elemente in den unterabgetasteten Folgen $\{d_n\}$, $\{pos_n\}$, $\{ori_n\}$, $\{ang_n\}$ sind hier jeweils mit dem Index n (n = 1, 2, ...) durchnummeriert, d.h. $d_n = d_{i+1}$ und $d_{n+1} = d_{i+100}$.

Um die genannten Lücken 15 in den Rohdaten 23, genauer der Entfernungsmesswertfolge 14, zu detektieren, dient ein Detektor 31. Der Detektor 31 spricht an, wenn der zeitliche Abstand $\Delta T$ (Fig. 3) zwischen zwei in der Entfernungsmesswertfolge 14 aufeinanderfolgenden Entfernungsmesswerten $d_i$, $d_{i+x}$ (x > 0) einen vorgegebenen Schwellwert $T_L$ überschreitet. Der Schwellwert $T_L$ entspricht beispielsweise dem Zwei-, Drei- oder Mehrfachen eines durchschnittlichen Sendeimpulsintervalls 1/PRR der Sendeimpulse $S_i$, um auf das Ausbleiben eines, zweier oder mehrerer Empfangsimpulse $E_i$ anzusprechen.

Es versteht sich, dass ein den Schwellwert $T_n$ überschreitender zeitlicher Abstand $\Delta T$ zwischen zwei aufeinanderfolgenden Entfernungsmesswerten $d_i$, $d_{i+x}$ durch einen Ausfall sowohl von Entfernungsmesswerten $d_i$ als auch Empfangsimpulsen $E_i$ bedingt ist. Es ist daher einerlei, ob der Detektor 31 auf ein Ausbleiben von Entfernungsmesswerten $d_i$ oder Empfangsimpulsen $E_i$ anspricht, beides ist von der hier verwendeten Formulierung "zeitlicher Abstand zweier in der Entfernungsmesswertfolge aufeinanderfolgender Entfernungsmesswerte" mitumfasst.

Sobald der Detektor 31 ein solches Ausbleiben von Entfernungsmesswerten $d_i$ oder Empfangsimpulsen $E_i$ feststellt, ist eine Lücke 15 detektiert und der Detektor 31 erstellt eine Datenmarkierung M für die Lücke 15. Die Datenmarkierung M kann z.B. ein Flag sein, das dem letzten vor der Lücke 15 empfangenen Entfernungsmesswert $d_i$ und/oder dem ersten nach der Lücke 15 empfangenen Entfernungsmesswert $d_{i+x}$ (im Beispiel von Fig. 3: x = 6) hinzugefügt wird. Alternativ oder zusätzlich könnte die Datenmarkierung M einem künstlich erzeugten, "virtuellen", in die Lücke 15 fallenden Entfernungsmesswert $d_v$, der beispielsweise einem Mittelwert der Entfernungsmesswerte vor und nach der Lücke 15 entspricht, hinzugefügt werden.

Die vom Detektor 31 erstellte Datenmarkierung M wird mitsamt dem oder gleichsam "huckepack" auf dem letzten Entfernungsmesswert $d_i$ vor und/oder ersten Entfernungsmesswert $d_{i+6}$ nach der Lücke 15 und/oder virtuellen Entfernungsmesswert $d_v$ in die unterabgetastete Entfernungsmesswertfolge $\{d_n\}$ 17 am Ausgang des Unterabtastglieds 16 eingespeist, siehe symbolisches Einspeiseglied 32. Eine weitere Möglichkeit wäre, die Datenmarkierung M dem letzten unterabgetasteten Entfernungsmesswert $d_n$ vor der Lücke 15 oder dem ersten unterabgetasteten Entfernungsmesswert $d_{n+1}$ nach der Lücke 15 beizugeben. Die solcherart mit Datenmarkierungen M versehene unterabgetastete Entfernungsmesswertfolge ist mit 33 und ihre gegebenenfalls markierten Entfernungsmesswerte mit $d'_n$ bezeichnet.

In einer anschließenden Recheneinheit 34 wird aus der unterabgetasteten, datenmarkierten Entfernungsmesswertfolge 33 unter Verwendung der jeweiligen Positions-, Orientierungs- und Winkelwerte $pos_n$, $ori_n$, $ang_n$ eine Folge 35 von unterabgetasteten datenmarkierten Abtastpunkten $P'_n$ berechnet, wie oben erläutert. Die gesamte Folge 35 von unterabgetasteten, datenmarkierten Abtastpunkten $P'_n$ stellt eine datenmarkierte Abtastpunktwolke 8' reduzierter Auflösung dar.

Fig. 6 zeigt ein Beispiel einer Vorschau V der datenmarkierten Abtastpunktwolke 8' auf dem Bildschirm 26 der Anzeigeeinrichtung 1". Die Vorschau V ist eine Projektion der datenmarkierten Abtastpunktwolke 8' in der Ansichtsrichtung A. Die Anzeigeeinrichtung 1" wertet dabei die Datenmarkierung(en) M aus und zeigt diese in einer für den Benutzer stets deutlich sichtbaren Größe auf dem Bildschirm 26 an, beispielsweise in Form eines großen roten Punktes, und zwar in örtlicher Nachbarschaft zu den die Lücke 15 umgebenden Entfernungsmesswerten $d_i$ bzw. unterabgetasteten Entfernungsmesswerten $d_n$. Die Anzeigeeinrichtung 1" kann optional gewährleisten, dass die Größe der Datenmarkierung(en) M auf dem Bildschirm 26 unabhängig vom Zoomfaktor des gerade angezeigten Ausschnitts der datenmarkierten Abtastwolke 8' ist. Die Datenmarkierung(en) M zeigen somit in der Vorschau V den/die Ort(e) der Scanlücke(n) 15 örtlich korrekt an, weil sie unmittelbar örtlich benachbart zu den/die Lücke(n) 15 umrahmenden Abtastpunkten $P_i$ bzw. $P_n$ liegt/liegen.

Fig. 7 zeigt eine alternative Ausführungsform der Vorrichtung 1, bei welcher die Scanlücken 15 in der vollen, nichtunterabgetasteten Abtastpunktefolge 36 detektiert werden. Die Recheneinheit 34 verarbeitet hier die gesamten Rohdaten 23. Ein Detektor 37 ist an den Ausgang der Recheneinheit 34 angeschaltet und spricht an, wenn zwischen zwei in der Abtastpunktefolge 36 aufeinanderfolgenden Abtastpunkten $P_i$, $P_{i+x}$ (hier: x = 6) eine Scanlücke 15 auftritt.

Die Scanlücke 15 kann dabei einerseits anhand eines Zeitkriteriums detektiert werden, wenn der zeitliche Abstand $\Delta T$ zwischen zwei in der Abtastpunktefolge 36 aufeinanderfolgenden Abtastpunkten $P_i$, $P_{i+x}$ einen vorgegebenen zeitlichen Schwellwert $T_L$ überschreitet, beispielsweise das Zwei-, Drei-, Vier- oder Mehrfache des durchschnittlichen Sendeimpulsabstandes 1/PRR.

Die Scanlücke 15 kann anderseits auch anhand eines Ortskriteriums detektiert werden, wenn der in Ansichtsrichtung A projizierte örtliche Abstand $\Delta O$ (Fig. 4) zwischen zwei in der Abtastpunktefolge 36 aufeinanderfolgenden Abtastpunkten $P_i$, $P_{i+x}$ einen vorgegebenen örtlichen Schwellwert $O_L$ überschreitet.

Wenn der Detektor 37 auf eines dieser Kriterien anspricht, ist eine Scanlücke 15 erkannt und der Detektor 37 erstellt eine Datenmarkierung M. Die Datenmarkierung M kann wieder dem letzten in der Abtastpunktefolge 36 vor der Lücke 15 liegenden Abtastpunkt $P_i$ oder dem ersten in der Abtastpunktefolge 36 nach der Lücke 15 liegenden Abtastpunkt $P_{i+x}$ hinzugefügt werden, oder einem künstlich erzeugten "virtuellen" Abtastpunkt $P_v$, welcher örtlich zwischen dem ersten und letzten Abtastpunkt $P_i$, $P_{i+x}$ liegt.

Der Detektor 37 speist über ein Einspeiseglied 38 die Datenmarkierung M in die Abtastpunktwolke 36 ein und erzeugt so eine datenmarkierte Abtastpunktefolge $\{P'_i\}$ bzw. 39. Die Anzeigeeinrichtung 1" empfängt die datenmarkierte Abtastpunktefolge 39 und zeigt sie als datenmarkierte Abtastpunktwolke 8' auf dem Bildschirm 26 an, wobei sie wieder gewährleistet, dass die Datenmarkierung(en) M in jeder Zoomstufe der Abtastpunktwolke 8' für den Benutzer deutlich erkennbar ist/sind.

In Fig. 7 strichliert eingezeichnet ist eine weitere Ausführungsform, bei welcher die Abtastpunktefolge $\{P_i\}$ 36 von einem optionalen Unterabtastglied 40 unterabgetastet und über das Einspeiseglied 38 mit der/den Datenmarkierung(en) M aus dem Detektor 37 versehen wird, um als datenmarkierte, unterabgetastete Abtastpunktefolge $\{P'_n\}$ der Anzeigeeinrichtung 1" zugeführt werden. Im Falle einer solchen Unterabtastung der Abtastpunktefolge 36 kann jede Datenmarkierung M hier wieder z.B. dem ersten und/oder letzten Abtastpunkt $P_n$, $P_{n+x}$ vor bzw. nach der detektierten Scanlücke 15 oder einem virtuellen Abtastpunkt $P_v$ hinzugefügt werden.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Vorrichtung zum Vermessen einer Umgebung von einem Fahrzeug aus, insbesondere Luftfahrzeug, mit

    einem fahrzeugmontierbaren Laserscanner (1'), der dafür ausgebildet ist, mittels im wesentlichen periodisch ausgesandter Laserimpulse (Si) die Umgebung (2) abzutasten und aus den umgebungsreflektierten Laserimpulsen ($E_i$) eine Folge (14) von Entfernungsmesswerten (di) und ausgehend von dieser eine Folge (35, 36) von Abtastpunkten ($P_i$, $P_n$) zu erstellen, welche eine Abtastpunktwolke (8') der Umgebung (2) bilden,
    **dadurch gekennzeichnet,**
    **dass** die Vorrichtung eine Anzeigeeinrichtung (1"), die dafür ausgebildet ist, die Abtastpunktwolke (8') in einer Ansichtsrichtung (A) projiziert auf einem Bildschirm (26) darzustellen, enthält, und
    **dass** der Laserscanner (1') dafür ausgebildet ist, für zwei in der Entfernungsmesswertfolge (14) aufeinanderfolgende Entfernungsmesswerte (di), deren zeitlicher Abstand ($\Delta T$) einen Schwellwert ($T_L$) überschreitet, oder für zwei in der Abtastpunktefolge (36) aufeinanderfolgende Abtastpunkte ($P_i$, $P_n$), deren zeitlicher oder in Ansichtsrichtung (A) projizierter örtlicher Abstand ($\Delta T$, $\Delta O$) einen Schwellwert ($T_L$, $O_L$) überschreitet, eine Datenmarkierung (M) zu erstellen,
    wobei die Anzeigeeinrichtung (1") dafür ausgebildet ist, die Datenmarkierung (M) auf dem Bildschirm (26) den genannten zwei Entfernungsmesswerten (di, $d_{i+x}$; $d_n$, $d_{n+1}$) bzw. Abtastpunkten ($P_i$, $P_{i+x}$; $P_n$, $P_{n+1}$) örtlich benachbart darzustellen.

2. Vorrichtung nach Anspruch 1, **dadurch gekennzeichnet, dass** der Laserscanner (1') dafür ausgebildet ist, die Entfernungsmesswertfolge (14) unterabzutasten und aus der unterabgetasteten Entfernungsmesswertfolge (17) die Abtastpunktefolge (35) zu erstellen,
    wobei der Laserscanner (1') dafür ausgebildet ist, die Datenmarkierung (M) mit einem den genannten zwei aufeinanderfolgenden Entfernungsmesswerten ($d_i$, $d_{i+x}$; $d_n$, $d_{n+1}$) zeitlich naheliegenden Entfernungsmesswert in die unterabgetastete Entfernungsmesswertfolge (17) einzuspeisen.

3. Vorrichtung nach Anspruch 1, **dadurch gekennzeichnet, dass** der Laserscanner (1') dafür ausgebildet ist, die Abtastpunktefolge (36) unterabzutasten und aus der unterabgetasteten Abtastpunktefolge (39) die Abtastpunktwolke (8') zu bilden,
    wobei der Laserscanner dafür ausgebildet ist, die Datenmarkierung (M) mit einem den genannten zwei Abtastpunkten ($P_i$, $P_{i+x}$; $P_n$, $P_{n+1}$) zeitlich oder in Ansichtsrichtung (A) projiziert örtlich naheliegenden Abtastpunkt in die unterabgetastete Abtastpunktefolge (39) einzuspeisen.

## Claims

1. Apparatus for measuring an environment from a vehicle, in particular an aircraft, with

a laser scanner (1') mountable on the vehicle and configured to scan the environment (2) by means of substantially periodically emitted laser pulses (Si) and to generate, from the environment-reflected laser pulses ($E_i$), a sequence (14) of distance measurements (di) and, based thereon, a sequence (35, 36) of scan points ($P_i$, $P_n$) which form a scan point cloud (8') of the environment (2),

**characterized in that**

the apparatus contains a display device (1") configured to display the scan point cloud (8'), projected in a viewing direction (A), onto a screen (26), and

the laser scanner (1') is configured to generate a data marker (M) for two consecutive distance measurements (di) in the sequence of distance measurements (14) whose temporal distance ($\Delta T$) exceeds a threshold value ($T_L$), or for two consecutive scan points ($P_i$, $P_n$) in the sequence of scan points (36) whose temporal or in the viewing direction (A) projected spatial distance ($\Delta T$, $\Delta O$) exceeds a threshold value ($T_L$, $O_L$),

wherein the display device (1") is configured to display the data marker (M) on the screen (26) locally adjacent to said two distance measurements (di, $d_{i+x}$; $d_n$, $d_{n+1}$) or scan points ($P_i$, $P_{i+x}$; $P_n$, $P_{n+1}$), respectively.

2. Apparatus according to claim 1, **characterized in that** the laser scanner (1') is configured to subsample the sequence of distance measurements (14) and to generate the sequence of scan points (35) from the subsampled sequence of distance measurements (17),

wherein the laser scanner (1') is configured to feed the data marker (M) with a distance measurement that is temporally close to said two consecutive distance measurements ($d_i$, $d_{i+x}$; $d_n$, $d_{n+1}$) into the subsampled sequence of distance measurements (17).

3. Apparatus according to claim 1, **characterized in that** the laser scanner (1') is configured to subsample the sequence of scan points (36) and to generate the scan point cloud (8') from the subsampled sequence of scan points (39),

wherein the laser scanner is configured to feed the data marker (M) with a scan point that is temporally close to or projected in the viewing direction (A) spatially close to said two scan points ($P_i$, $P_{i+x}$; $P_n$, $P_{n+1}$) into the subsampled sequence of scan points (39).

**Revendications**

1. Dispositif de mesure d'un environnement à partir d'un véhicule, notamment d'un aéronef, pourvu

d'un scanner laser (1') pouvant être monté sur le véhicule et conçu pour balayer l'environnement (2) au moyen d'impulsions laser (Si) émises essentiellement de manière périodique et pour établir à partir des impulsions laser (Ei) réfléchies par l'environnement une séquence (14) de valeurs de mesures d'éloignement (di) et, en partant de celle-ci, une séquence (35, 36) de points de balayage ($P_i$, $P_n$), lesquels constituent un nuage de points de balayage (8') de l'environnement (2),

**caractérisé en ce**

**que** le dispositif contient un dispositif d'affichage (1") conçu pour afficher sur un écran (26) le nuage de points de balayage (8') projeté dans une direction de vision (A), et

**que** le scanner laser (1') est conçu pour établir un marqueur de données (M) pour deux valeurs de mesures d'éloignement (di) consécutives dans la séquence de valeurs de mesure d'éloignement (14), dont l'intervalle temporel ($\Delta T$) dépasse une valeur de seuil ($T_L$), ou pour deux points de balayage ($P_i$, $P_n$) consécutifs dans la séquence des points de balayage (36), dont l'intervalle ($\Delta T$, $\Delta O$) temporel, ou spatial projeté dans la direction de la vue (A), dépasse une valeur de seuil ($T_L$, $O_L$),

dans lequel le dispositif d'affichage (1") est conçu pour afficher le marqueur de données (M) sur l'écran (26) localement voisin des dites deux valeurs de mesures d'éloignement (di, $d_{i+x}$; $d_n$, $d_{n+1}$) ou des points de balayage ($P_i$, $P_{i+x}$; $P_n$, $P_{n+1}$), respectivement.

2. Dispositif selon la revendication 1, **caractérisé en ce que** le scanner laser (1') est conçu pour sous-échantillonner la séquence de valeurs de mesure d'éloignement (14), et pour établir la séquence des points de balayage (35) à partir de la séquence de valeurs de mesures d'éloignement (17) sous-échantillonnée,

dans lequel le scanner laser (1') est conçu pour entrer dans la séquence de valeurs de mesure d'éloignement (17) sous-échantillonnée le marqueur de données (M) avec une valeur de mesure d'éloignement se situant temporellement proche des dites deux valeurs de mesures d'éloignement ($d_i$, $d_{i+x}$; $d_n$, $d_{n+1}$) consécutives.

3. Dispositif selon la revendication 1, **caractérisé en ce que** le scanner laser (1') est conçu pour sous-échantillonner la séquence de points de balayage (36) et pour former le nuage de points de balayage (8') à partir de la séquence de points de balayage (39) sous-échantillonnée,
dans lequel le scanner laser (1') est conçu pour entrer dans la séquence de points de balayage (39) sous-échantillonnée le marqueur de données (M) avec un point de balayage se situant temporellement ou, projeté dans la direction de vision (A), spatialement proche des dits deux points de balayage ($P_i$, $P_{i+x}$; $P_n$, $P_{n+1}$).

**Fig. 1**

**Fig. 2**

**Fig. 3**

**Fig. 4**          **Fig. 6**

*Fig. 5*

*Fig. 7*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SIMON GRIFFIOEN.** *A Voxel-based Methodology to Detect (Clustered) Outliers in Aerial LIDAR Point Clouds,* 01. November 2018, http://resolver.tudelft.nl/uuid:2ffa73f4-34cc-4ea0-82df-11e61cb47bea